# EUROPÄISCHE PATENTANMELDUNG

(11) **EP 4 137 389 A1**
(43) Veröffentlichungstag der Anmeldung: **22.02.2023**
(21) Anmeldenummer: 21191636.6
(22) Anmeldetag: 17.08.2021
(51) Int. Cl.: B62D 29/00, B62D 25/00, B62D 65/00, B29C 44/18, B60S 5/00

(54) **REPARATURKIT UND VERFAHREN ZUM AUSTAUSCH VON ABSCHOTTELEMENTEN VON HOHLRÄUMEN IN KRAFTFAHRZEUGKAROSSERIEN**

(71) Anmelder: Henkel AG & Co. KGaA, 40589 Düsseldorf (DE)
(72) Erfinder: Kizler, Tobias, 71672 Marbach (DE); Geisler, Udo, 81929 München (DE); Dalhäuser, Ralph, 68519 Viernheim (DE); Santinho Ferreira, Dario Miguel, 69527 Wiesenbach (DE); Elsner, Michael, 33803 Steinhagen (DE); Plotzitzka, Joachim, 76327 Kleinsteinbach, Gem. Pfinztal (DE)
(74) Vertreter: Wagner Albiger & Partner Patentanwälte mbB

(57) **Zusammenfassung**

Reparaturkit (5) zum Austausch von Abschottelementen (4) von Hohlräumen (3) in Kraftfahrzeugkarosserien, umfassend:
- zumindest eine selbsttragende Trägerplatte (6) aus einem Kunststoff, wobei die Trägerplatte (6) eine Dicke d aufweist mit 1 mm ≤ d ≤ 50 mm, sowie
- einen pastösen und/oder expandierenden Kleb- und Dichtstoff (11) zum Fixieren eines aus der Trägerplatte (6) zugeschnittenen Abschottelements (4) in einen Hohlraum (3).

## Beschreibung

Die vorliegende Erfindung betrifft ein Reparaturkit zum Austausch von Abschottelementen von Hohlräumen in Kraftfahrzeugkarosserien. Sie betrifft ferner ein Verfahren für eine derartige Reparatur.

Bei der Reparatur beispielsweise von Unfallschäden müssen häufig Abschottelemente, die Querschnitte von Hohlräumen in Kraftfahrzeugkarosserien wasserdicht und schalldämmend verschließen, ausgetauscht werden. Üblicherweise liegt das auszutauschende Abschottelement als Ersatzteil vor, wird von der Werkstatt gegebenenfalls bestellt und eingebaut. Das hat den Vorteil, dass das Ersatzteil passgenau zur Verfügung steht und eine gleichbleibende Qualität erwartet werden kann. Nachteilig ist dabei jedoch die aufwändige Lagerhaltung, da Abschottelemente in vielen verschiedenen Formen und Größen vorkommen, die eine Werkstatt gar nicht alle vorhalten kann, sondern im Bedarfsfall bestellen muss. Das macht auch die Verwaltung einer großen Anzahl von Sachnummern notwendig.

Alternativ ist es möglich, ein Ersatzteil im 3D-Druck herzustellen. Dies ist jedoch ebenfalls verhältnismäßig zeitaufwendig und kostenintensiv, setzt eine entsprechende Infrastruktur oder einen externen Partner voraus und erfordert ebenfalls die Verwaltung sehr vieler Artikel.

Eine einfache Möglichkeit für kleine Hohlräume ist es, diese mit Schaum zu verfüllen, statt ein Abschottelement einzusetzen. Dies ist jedoch nur bei kleinen Querschnitten möglich, zudem ist häufig eine Abdichtfunktion des Schaums nicht gewährleistet.

Es besteht somit der Bedarf, besonders einfach handhabbare, schnell verfügbare und einfach zu verwaltende Ersatzteile für Originalabschottelemente von Hohlräumen in Fahrzeugkarosserien bereitzustellen.

Diese Aufgabe wird gelöst mit dem Gegenstand der unabhängigen Patentansprüche. Weitere Ausführungsformen und vorteilhafte Ausgestaltungen sind Gegenstand der Unteransprüche.

Gemäß einem Aspekt der Erfindung wird ein Reparaturkit zum Austausch von Abschottelementen von Hohlräumen in Kraftfahrzeugkarosserien angegeben, das zumindest eine selbsttragende Trägerplatte aus einem insbesondere porösen Kunststoff umfasst, wobei die Trägerplatte eine Dicke d aufweist mit 1 mm ≤ d ≤ 50 mm. Ferner umfasst das Reparaturkit einen pastösen und/oder expandierenden Kleb- und Dichtstoff zum Fixieren eines aus der Trägerplatte zugeschnittenen Abschottelements in einem Hohlraum.

Das Verfahren hat den Vorteil, dass mittels des Reparaturkits eine große Bandbreite individueller Querschnitte bzw. Formstücke bereitgestellt werden kann. Das Reparaturkit ist somit universell einsetzbar für verschiedene Fahrzeugtypen und unterschiedliche Abschottelemente. Die Reparatur bzw. der Austausch von Abschottelementen wird somit weniger komplex gestaltet und sowohl der Logistikaufwand als auch die Anzahl der Sachnummern werden erheblich reduziert. Zudem wird die Lagerhaltung vereinfacht sowie die Lieferzeiten verkürzt. Aufwändige Prozesse wie beispielsweise individuelle 3D- Drucke müssen nicht zur Anwendung kommen.

Somit vereinfacht und beschleunigt das Reparaturkit den Austausch von Abschottelementen und reduziert Kosten erheblich.

Die Trägerplatte ist vorzugsweise selbsttragend, d.h. aus ihr zugeschnittene Abschottelemente lassen sich bis auf Ausnahmen bei sehr großen Querschnitten ohne zusätzliche Abstützelemente im Hohlraum fixieren. Die Ausbildung der Trägerplatte beispielsweise aus einem porösen Kunststoff bewirkt eine gute Schalldämmung. Wie sich herausgestellt hat, ist eine Dicke der Trägerplatte zwischen 1 mm und 50 mm, bevorzugt zwischen 5 mm und 20 mm, insbesondere zwischen 12 mm und 15 mm, besonders vorteilhaft. Trägerplatten einer solchen Dicke bieten noch ausreichend Fläche zum Auftrag einer Raupe aus Kleb- und Dichtstoff auf den Kanten und lassen sich gut mit einfachen Mitteln zuschneiden.

Bei dem verwendeten pastösen und/oder expandierenden Kleb- und Dichtstoff handelt es sich um ein Material, das geeignet ist, das zugeschnittene Abschottelement in dem Hohlraum zu fixieren und dabei Toleranzen auszugleichen, so dass eine sichere Abdichtung des Hohlraums gewährleistet ist.

Gemäß einer Ausführungsform ist die Trägerplatte wasserundurchlässig ausgebildet. Das hat den Vorteil, dass für eine notwendige wasserdichte Abschottung des Hohlraums auf weitere Maßnahmen, beispielsweise den Auftrag einer weiteren Schicht auf die Trägerplatte, verzichtet werden kann.

Ist die Trägerplatte als poröser Kunststoff ausgebildet, so ist eine geschlossenporige Ausführung vorteilhaft. Ein derartiger Kunststoff weist nicht nur gute schalldämmende Eigenschaften auf, sondern ist auch wasserundurchlässig. Beispielsweise kann die Trägerplatte zumindest einseitig mit einer geschlossenen Polyurethan-Schutzhaut versehen sein. Wie sich herausgestellt hat, sind derartige Materialien besonders geeignet, weil sie die geforderte Fähigkeit zur Schalldämmung aufweisen sowie wasserundurchlässig sind und sich zudem sehr gut verarbeiten lassen. Vorteilhaft wäre, wenn die PU-Schaumplatte flammenhemmend, sowie Öl-/ Benzin- und wasserbeständig ausgeführt wird

Gemäß einer Ausführungsform weist der Kleb- und Dichtstoff ein silanmodifiziertes Polymer auf. Bei den silanmodifizierten Polymeren handelt es sich um Einkomponenten-Klebstoffe, die durch eine chemische Reaktion aushärten. Neben dem silanmodifizierten Polymer kann der Kleb- und Dichtstoff auch Weichmacher, Vernetzer- oder Wasserfängersilane sowie Additive und Füllstoffe aufweisen. Bei derartigen Kleb- und Dichtstoffen vernetzen silanisierte Endgruppen unter dem Einfluss von Feuchtigkeit und können in Anwesenheit von Katalysatoren Silanole bilden, die zu sehr stabilen Siloxannetzwerken kondensieren.

Derartige Kleb- und Dichtstoffe eignen sich für den genannten Zweck besonders gut, da sie eine ausreichende Haftung auf den beteiligten Oberflächen sowie eine gute Standfestigkeit bei der Applikation aufweisen. Sie eignen sich auch für einen Toleranzausgleich im Spalt zwischen dem Abschottelement und den umgebenden Karosserieteilen und dichten somit zuverlässig ab.

Ein derartiger Kleb- und Dichtstoff kann optional eine lange Offenzeit von mehr als 7 Minuten aufweisen und/oder expandierend sein.

Gemäß einer Ausführungsform umfasst das Reparaturkit zusätzlich zumindest eine Schablone für den Zuschnitt eines Abschottelements aus der Trägerplatte. Eine derartige Schablone kann als Papp- oder Kunststoffteil beiliegen oder in digitaler Form zur Verfügung gestellt werden, um den Zuschnitt des Abschottelements zu erleichtern.

Gemäß einem Aspekt der Erfindung wird ein Verfahren zum Austausch von Abschottelementen von Hohlräumen in Kraftfahrzeugkarosserien angegeben, bei dem ein an eine Querschnittsform des Hohlraums angepasstes Abschottelement aus einer selbsttragenden Trägerplatte mit einer Dicke d mit 1 mm ≤ d ≤ 50 mm ausgeschnitten wird und mittels eines pastösen und/oder expandierenden Kleb- und Dichtstoffs in dem Hohlraum fixiert wird.

Das Verfahren weist die bereits im Zusammenhang mit dem Reparaturkit beschriebenen Vorteile auf.

Dabei kann der Kleb- und Dichtstoff optional entweder auf das einzusetzende Abschottelement oder auf das Karosserieteil aufgetragen werden. Typischerweise ist es einfacher, den Kleb- und Dichtstoff direkt auf das Abschottelement aufzutragen und dieses anschließend in den Hohlraum einzusetzen.

Für den Zuschnitt des Abschottelements kann eine zur Verfügung gestellte Schablone verwendet werden. Alternativ oder zusätzlich kann für den Zuschnitt auch die Querschnittsform des Hohlraums mittels einer Konturenlehre abgenommen werden. Dieses Vorgehen eignet sich besonders für verhältnismäßig einfach geformte Querschnitte.

Gemäß einer Ausführungsform wird das Abschottelement vor oder nach dem Fixieren in dem Hohlraum mit einer Beschichtung versehen. Bei der Beschichtung kann es sich insbesondere um eine Beschichtung handeln, die eine Wasserundurchlässigkeit der Trägerplatte bewirkt oder verbessert. Die Beschichtung kann durch das Aufbringen einer Folie erfolgen, durch die Applikation von Flutwachs, durch die vollflächige Aufbringung des Kleb- und Dichtstoffs oder durch die Applikation eines anderen Dichtmaterials. Ein solches Vorgehen ist vorteilhaft, wenn die Wasserundurchlässigkeit der Trägerplatte selbst nicht ausreichend gegeben ist.

Das Abschottelement kann in bestimmten Fällen vorteilhaft zusammen mit Griffbereichen als Positionierungs- und Applikationshilfe aus der Trägerplatte ausgeschnitten werden. Die Griffbereiche stellen an das Abschottelement angeformte Bereiche dar, die nicht dem Querschnitt des Hohlraums entsprechen. Folglich werden die Griffbereiche nach dem Fixieren im Hohlraum von dem Abschottelement entfernt. Dieses Vorgehen eignet sich besonders, wenn vor oder nach dem Einsetzen des Abschottelements in den Hohlraum eine Beschichtung auf das Abschottelement aufgebracht werden soll und anschließend der Hohlraum durch das Aufsetzen eines weiteren Karosserieteils geschlossen werden soll. In diesem Fall dienen die Griffbereiche zum Halten der Trägerplatte vor ihrer Fixierung im Hohlraum.

Gemäß einer Ausführungsform wird aus der Trägerplatte ferner eine Anzahl von Stützelementen ausgeschnitten, die ebenfalls im Hohlraum fixiert werden, um das Abschottelement an einer Wand des Hohlraums abzustützen. Derartige Stützelemente können beispielsweise in Form von Winkeln oder Dreiecken ausgebildet sein und auch aus Rest- oder Randteilen der Trägerplatte zugeschnitten werden. Diese Ausführungsform eignet sich besonders, wenn das Abschottelement eine sehr große Querschnittsfläche aufweist und möglicherweise für sich genommen nicht ausreichend stabil ist.

Das Abschottelement kann vor oder nach dem Fixieren in dem Hohlraum mit einer wasserdichten Sperrschicht versehen werden, die als Beschichtung mit einem Flutwachs, einem Lack, dem Kleb- und Dichtstoff oder einem anderen wasserundurchlässigen Stoff ausgebildet sein oder durch das Aufbringen einer Folie bereitgestellt werden kann. Zudem ist es möglich, dass die Trägerplatte selbst aus mehreren Schichten besteht, beispielsweise zwei Schichten aus einem offenporigen Schaumstoff, zwischen denen eine wasserdichte Sperrschicht angeordnet ist.

Diese Ausführungsform hat den Vorteil, dass das für die Trägerplatte verwendete Material flexibler gewählt werden kann, da es nicht notwendigerweise für sich genommen wasserundurchlässig ausgebildet sein muss.

Das Verfahren kann insbesondere unter Verwendung des bereits beschriebenen Reparaturkits ausgeführt werden.

Ausführungsformen der Erfindung werden im Folgenden anhand von schematischen Figuren näher erläutert.
- Figur 1: zeigt einen Hohlraum in einer Kraftfahrzeugkarosserie, der mittels eines Abschottelements abgedichtet werden soll;
- Figur 2: zeigt eine perspektivische Ansicht eines mittels eines erfindungsgemäßen Verfahrens und Reparaturkits zugeschnittenen Abschottelements;
- Figur 3: zeigt eine perspektivische Ansicht des Abschottelements gemäß Figur 2 nach dem Auftragen eines Kleb- und Dichtstoffs;
- Figur 4: zeigt einen Querschnitt durch einen Teil der Kraftfahrzeugkarosserie gemäß Figur 1 nach dem Einsetzen des Abschottelements;
- Figur 5: zeigt die vollständig geschlossene Kraftfahrzeugkarosserie gemäß Figur 4 und
- Figur 6: zeigt ein Reparaturkit gemäß einer Ausführungsform der Erfindung.

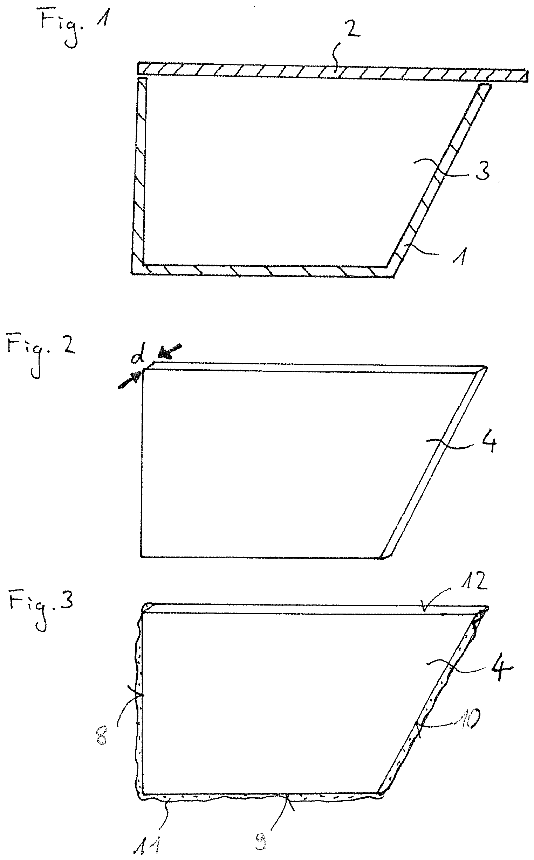

Figur 1 zeigt einen Querschnitt durch eine Kraftfahrzeugkarosserie, die in der gezeigten Ausführungsform aus einem ersten Karosserieteil 1 sowie einem zweiten Karosserieteil 2 besteht, zwischen denen ein Hohlraum 3 gebildet ist. Der Hohlraum 3 soll, um ihn gegen Wasser abzudichten und um ihn mit einer Schalldämmung zu versehen, mit einem Abschottelement abgedichtet werden, dass die gesamte Querschnittsfläche des Hohlraums 3 abdichtet. Ein derartiges Abschottelement wird als Ersatzteil beispielsweise benötigt, wenn das Originalteil bei einem Unfall zerstört wurde.

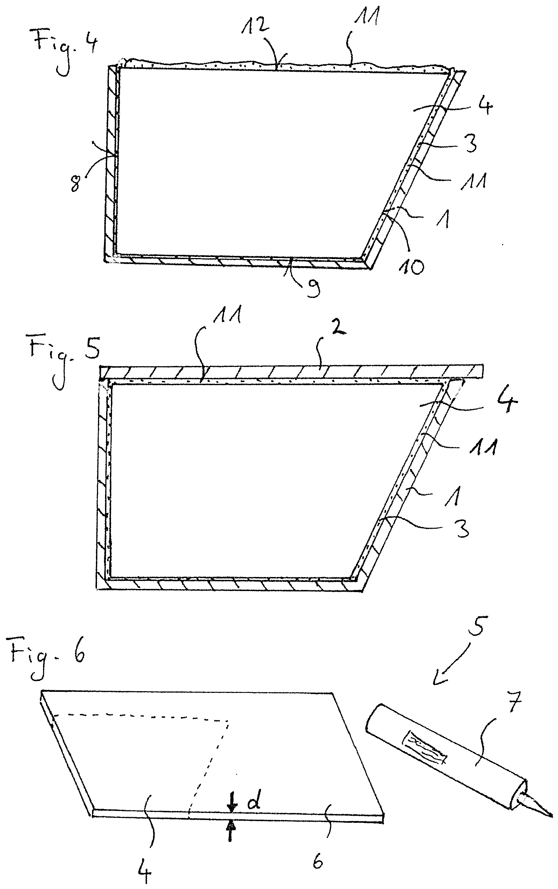

Figur 2 zeigt eine perspektivische Ansicht eines Abschottelements 4, das aus der in Figur 6 gezeigten Trägerplatte 6 des Reparaturkits 5 geschnitten wurde. Das Abschottelement 4 weist wie die Trägerplatte 6 eine Dicke d zwischen beispielsweise 12 und 15 mm auf und ist aus einem geschlossenporigen PU- Schaum ausgebildet. Die Maße und Konturen des Abschottelements 4 entsprechen dem Querschnitt des Hohlraums 3 in der Fahrzeugkarosserie, abzüglich eines umlaufenden Spalts für den Vorhalt eines Klebstoffs (Spaltgröße klebstoffabhängig).

Das Abschottelement 4 wurde beispielsweise unter Zuhilfenahme einer Schablone aus der Trägerplatte 6 ausgeschnitten.

Figur 3 zeigt das Abschottelement 4 nach dem Auftragen eines Kleb- und Dichtstoffs 11 auf die drei Seitenflächen 8, 9 und 10, die mit dem ersten Karosserieteil 1 in Kontakt zu bringen sind. Bei dem Kleb- und Dichtstoff 11 handelt es sich um einen pastösen und/oder expandierenden Kleb- und Dichtstoff, insbesondere ein silanmodifiziertes Polymer, das in der in Figur 6 gezeigten Kartusche 7 vorgehalten wird, die ebenfalls Teil des Reparaturkits 5 ist.

Nach dem Auftragen des Kleb- und Dichtstoffs 11 auf die Seitenflächen 8, 9, 10 wird das Abschottelement 4, wie in Figur 4 gezeigt, in den Hohlraum 3 eingesetzt. Dabei kommen die Seitenflächen 8, 9, 10 mit dem ersten Karosserieteil 1 in Kontakt und werden durch den Kleb- und Dichtstoff 11 mit diesem dicht verklebt. Ein Toleranzausgleich, beispielsweise im Bereich von einigen Millimetern, kann dabei durch den Kleb- und Dichtstoff 11 erzielt werden.

Nach dem Einsetzen des Abschottelements 4 in den Hohlraum 3 wird, wie in Figur 4 gezeigt, auf die vierte Seitenfläche 12 des Abschottelements 4 ebenfalls eine Raupe aus Kleb- und Dichtstoff 11 aufgebracht.

Anschließend wird, wie in Figur 5 gezeigt, der Hohlraum 3 durch Aufsetzen des zweiten Karosserieteils 2 geschlossen, wodurch die vierte Seitenfläche 12 mit dem zweiten Karosserieteil 2 verklebt und gegen dieses abgedichtet wird.

Figur 6 zeigt das bei dem anhand der Figuren 1 bis 5 beschriebenen Verfahren verwendete Reparaturkit 5. Dieses umfasst zumindest eine Trägerplatte 6, die aus selbsttragendem Polyurethan (PU)-Schaum ausgebildet ist, sowie eine Kartusche 7 mit dem Kleb- und Dichtstoff 11. Das Reparaturkit 5 kann darüber hinaus auch Schablonen für den Zuschnitt unterschiedlicher Abschottelemente 4 enthalten sowie eine Anleitung zur Verwendung des Reparaturkits 5.

Die Figuren 1 bis 5 zeigen das Einsetzen eines Abschottelements 4 in einen Hohlraum 3 mit kleinem oder mittlerem Querschnitt. Falls Hohlräume mit sehr großem Querschnitt abgedichtet werden sollen, kann es vorteilhaft sein, aus der Trägerplatte 6 Stützelemente auszuschneiden, die sowohl an dem Abschottelement 4 als auch an einer Wand des Hohlraums 3 mittels dem Kleb- und Dichtstoff 11 fixiert werden, um dem Abschottelement 4 zusätzliche Stabilität zu geben.

### Bezugszeichenliste

- 1: erstes Karosserieteil
- 2: zweites Karosserieteil
- 3: Hohlraum
- 4: Abschottelement
- 5: Reparaturkit
- 6: Trägerplatte
- 7: Kartusche
- 8: Seitenfläche
- 9: Seitenfläche
- 10: Seitenfläche
- 11: Kleb- und Dichtstoff
- 12: Seitenfläche

- d: Dicke

## Patentansprüche

1. Reparaturkit (5) zum Austausch von Abschottelementen (4) von Hohlräumen (3) in Kraftfahrzeugkarosserien, umfassend:
- zumindest eine selbsttragende Trägerplatte (6) aus einem Kunststoff, wobei die Trägerplatte (6) eine Dicke d aufweist mit 1 mm ≤ d ≤ 50 mm, sowie
- einen pastösen und/oder expandierenden Kleb- und Dichtstoff (11) zum Fixieren eines aus der Trägerplatte (6) zugeschnittenen Abschottelements (4) in einen Hohlraum (3).

2. Reparaturkit (5) nach Anspruch 1,
wobei die selbsttragende Trägerplatte (6) aus einem porösen Kunststoff ausgebildet ist.

3. Reparaturkit (5) nach Anspruch 1 oder 2,
wobei die Trägerplatte (6) wasserundurchlässig ist.

4. Reparaturkit (5) nach einem der Ansprüche 1 bis 3,
wobei für die Dicke d der Trägerplatte (6) 5 mm ≤ d ≤ 20 mm, insbesondere 12 mm ≤ d ≤ 15 mm gilt.

5. Reparaturkit (5) nach einem der Ansprüche 2 bis 4,
wobei der poröse Kunststoff der Trägerplatte (6) geschlossenporig ausgebildet ist.

6. Reparaturkit (5) nach einem der Ansprüche 1 bis 5,
wobei die Trägerplatte (6) als zumindest einseitig mit einer geschlossenen Polyurethan-Schutzhaut versehene Polyurethan-Schaumplatte ausgebildet ist.

7. Reparaturkit (5) nach einem der Ansprüche 1 bis 6,
wobei der Kleb- und Dichtstoff (11) ein silanmodifiziertes Polymer aufweist.

8. Reparaturkit (5) nach einem der Ansprüche 1 bis 7,
zusätzlich umfassend zumindest eine Schablone für den Zuschnitt eines Abschottelements (4) aus der Trägerplatte (6).

9. Verfahren zum Austausch von Abschottelementen (4) von Hohlräumen (3) in Kraftfahrzeugkarosserien, bei dem ein der Querschnittsform des Hohlraums (3) angepasstes Abschottelement (4) aus einer selbsttragenden Trägerplatte (6) mit einer Dicke d mit 1 mm ≤ d ≤ 50 mm aus einem Kunststoff ausgeschnitten wird und mittels eines pastösen und/oder expandierenden Kleb- und Dichtstoffs (11) in dem Hohlraum (3) fixiert wird.

10. Verfahren nach Anspruch 9,
wobei für den Zuschnitt eine Schablone verwendet wird.

11. Verfahren nach Anspruch 9 oder 10,
wobei für den Zuschnitt die Querschnittsform des Hohlraums (3) mittels einer Konturenlehre abgenommen wird.

12. Verfahren nach einem der Ansprüche 9 bis 11,
wobei das Abschottelement (4) vor oder nach dem Fixieren in dem Hohlraum (3) mit einer Beschichtung versehen wird.

13. Verfahren nach einem der Ansprüche 9 bis 12,
wobei das Abschottelement (4) zusammen mit Griffbereichen aus der Trägerplatte (6) ausgeschnitten wird, die nach dem Fixieren im Hohlraum (3) von dem Abschottelement (4) entfernt werden.

14. Verfahren nach einem der Ansprüche 9 bis 13,
wobei aus der Trägerplatte (6) ferner eine Anzahl von Stützelementen ausgeschnitten wird, die ebenfalls im Hohlraum (3) fixiert werden, um das Abschottelement (4) an einer Wand des Hohlraums (3) abzustützen.

15. Verfahren nach einem der Ansprüche 9 bis 14,
wobei das Abschottelement (4) vor oder nach dem Fixieren in dem Hohlraum (3) mit einer wasserdichten Sperrschicht versehen wird.
